# EUROPEAN PATENT SPECIFICATION

(11) **EP 0 627 746 B1**
(45) Date of publication and mention of the grant of the patent: **03.05.2000**
(21) Application number: 94108529.2
(22) Date of filing: 03.06.1994
(51) Int. Cl.: H01B 1/12, C08G 73/02

(54) **Method for the preparation of a processable conductive polymer material**
Verfahren zur Herstellung eines verarbeitbaren leitfähigen Polymer-Materials
Méthode de préparation d'un matériau polymère conducteur façonnable

(30) Priority: 04.06.1993 FI 932557
(43) Date of publication of application: 07.12.1994
(73) Proprietor: NESTE OY, 02150 Espoo (FI)
(72) Inventor: Kärnä, Toivo, SF-006400 Provoo 10 (FI); Laakso, Jukka, SF-00250 Helsinki (FI); Ruohonen, Heikki, SF-00270 Helsinki (FI); Savolainen, Esko, SF-15880 Hollola 3 (FI); Väkiparta, Kimmo, SF-00900 Helsinki (FI); Ikkala, Olli, SF-00160 Helsinki (FI); Virtanen, Esa, SF-06100 Provoo (FI); Järvinen, Hannele, SF-01280 Vantaa (FI)
(74) Representative: Hansen, Bernd, Dr. Dipl.-Chem.

(56) References cited:
- EP-A- 0 545 729
- EP-A- 0 582 919
- WO-A-90/01775
- WO-A-90/13601
- WO-A-92/22911
- US-A- 5 176 851

## Description

The invention relates to a method for the preparation of a processable conductive polymer material based on polyaniline or a derivative thereof and a protonic doping acid.

Electrically conductive polymers are at present subject to great interest in different parts of the world. These polymers can be used for replacing metal conductors and semiconductors in a number of applications, such as batteries, sensors, switches, light cells, circuit boards, heating elements, electrostatic discharge elimination (ESD), and electromagnetic interference shielding (EMI). The advantages of conductive polymers over metals include their light weight, mechanical properties, corrosion resistance, and less expensive synthesis and processing methods.

Electrically conductive plastics can be divided roughly into two categories: filled conductive plastics, in which an electrically conductive filler, such as carbon black or soot, carbon fiber, metal powder, etc., is added to a thermosetting or thermoplastic resin, and intrinsically conductive plastics, which are based on polymers which have been rendered electrically conductive by oxidation or reduction (doping).

The electrical conductivity of filled conductive polymers is dependent on mutual contacts between the conductive filler particles. Usually a well dispersed filler is needed at approx. 10 - 50 wt.% to produce composites having a good conductivity. However, such conductive composites involve problems; their mechanical and certain of their chemical properties are crucially impaired as the filler content increases and the polymer content decreases, their conductivity is difficult to control especially within the semiconductor range, and stable and homogenous dispersing of their filler into the matrix plastic is difficult.

Intrinsically conductive plastics can be prepared from organic polymers containing long conjugated chains formed by double bonds and heteroatoms. The polymers can be rendered electrically conductive by disturbing the π- and π-p-electron systems in their double bonds and heteroatoms by adding to the polymer certain blending or doping agents which will serve as electron receptors or electron donors in the polymer. Thereby electron holes or extra electrons are formed in the polymer chain, enabling electric current to travel along the conjugated chain.

An advantage of the intrinsically conductive plastics is the ease of varying their conductivity as a function of the amount of the doping agent, i.e. the degree of doping, especially within low conductivity ranges. On the other hand, achieving low conductivities with filled conductive plastics is difficult. Examples of currently known intrinsically conductive polymers include polyacetylene, poly-p-phenylene, polypyrrole, polythiophene and its derivatives, and polyaniline and its derivatives.

There are two principal methods for processing conductive polymers into the desired pieces, fibers, films, etc., i.e. melt processing and solution processing. Melt processing is a versatile processing method, whereas solution processing is suitable mainly for the preparation of fibers and films but not profiled pieces. However, the processing and doping of most intrinsically conductive polymers involve problems with respect to the handling, stability, homogeneity, etc., of the materials.

Polyaniline with its derivatives is in particular a technically and commercially promising intrinsically conductive polymer. An aniline polymer or a derivative thereof is made up of aniline monomers, the nitrogen atom of which is bonded to the para-carbon of the benzene ring of the subsequent unit. Unsubstituted polyaniline may appear in a number of forms, including leucoemeraldine, protoemeraldine, emeraldine, nigraline, and toluprotoemeraldine forms. For conductive polymer applications, the emeraldine form is generally used,
having in principle the formula 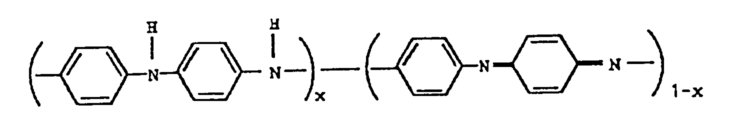 wherein X is approx. 0.5.

According to state-of-the-art technology, the doping of polyaniline is usually carried out by using protonic acids, which include HCl, H₂SO₄, HNO₃, HClO₄, HBF₄, HPF₆, HF, phosphoric acids, sulfonic acids, picrinic acid, m-nitrobenzoic acid, dichloroacetic acid, and polymer acids. Preferably the doping is carried out using sulfonic acid or its derivatives, such as dodecylbenzenesulfonic acid (DBSA). The protonization is focussed on the iminic nitrogen atoms in the aniline units according to the formula presented above, approx. 50 % of the N atoms of polyaniline thus being such atoms. Examples of publications in the field include US Patent publications 3 963 498, 4 025 463, and 4 983 322. The doping of polyaniline with protonic acids is also widely discussed in the literature in the field. US Patent publication 5 171 478 discloses a method for increasing the molar mass of polyaniline by heating the polyaniline until its viscosity has increased.

US Patent 5,232,631 discloses processible polyaniline compositions and blends that exhibit much lower percolation thresholds, sometimes even below 1 % w/w, of conductive polyaniline. The patent relates to conductive polymers and particularly to the use of functionalized protonic acids to induce processibility of electrically conductive polyanilines, and to induce solubility of electrically conductive polyanilines in organic liquids or fluid (melt) phases of solid polymers.

However, the processing a doped polyaniline having good conductivity properties by versatile melt-processing methods has involved problems, to which solutions have been sought. The mixture of polyaniline or a derivative thereof and a doping protonic acid is an indefinite, staining, strongly corrosive, fluid or paste-like material which is difficult to handle. A significant improvement to the preparation of a polyaniline-based, melt-processable conductive polymer having good conductivity and other properties are disclosed in EP Patent Application 545279. According to the invention disclosed in the said Application, a solid, electrically conductive plastics material with good properties is obtained by first contacting the polyaniline or a derivative thereof with a doping protonic acid and by thereafter heat-treating the reaction product or mixture at a temperature of approx. +40 - +250 °C. The heat treatment (hereafter called solidification) renders the above-described preprotonized mixture of polyaniline or a derivative thereof and a doping protonic acid, which is difficult to handle, a homogenous, solid, relatively inert powder or granular material which is easy to handle and is suitable for use in, for example, various melt processing methods. US patent publication 5 171 478 discloses a method for increasing the molar mass of polyaniline by heating it until its viscosity has increased.

Polyaniline doped with a protonic acid has proved to be especially usable when it contains an excess of the protonic acid, such as the above-mentioned sulfonic acid or a derivative thereof, i.e. the mixture contains acid not only sufficiently for the doping but also for the plasticization of the mixture. When protonic acid is used in this manner in excess, effective doping of polyaniline is obtained and, additionally, the doped polyaniline becomes a material suitable for melt processing, since the protonic acid plays the said two roles in the mixture. When protonic acid is used in this manner in excess, the result is a doped polyaniline which has an acid pH value. However, acidity encumbers the use of the conductive polymer in most applications. In addition to acid products corroding and contaminating other composite plastics components and the environment, acid material to be processed damages the equipment, such as melt-processing apparatus, by corroding it, in which case the applications of a conductive material good as such remain few in practice.

State-of-the-art publications have almost completely overlooked the problem of acidity. On the other hand, it is evident in the state of the art that mere mixing together of a polyaniline of the emeraldine base form and a doping agent such as dodecylbenzenesulfonic acid will not suffice to produce a homogenous mixture; the result is the abovementioned mixture or dispersion which is difficult to handle. In state-of-the-art publications, sufficient mixing and doping has in general been effected by dissolving the parts of the mixture in the same solvent. Examples of the state-of-the-art publications concerning this include US Patent publication 5 006 278. In addition, the methods disclosed in the state-of-the-art publications in general use solution processing, cf. WO Patents 8 901 694 and 9 013 601, in which case the acidity problem will not cause as much harm as in melt processing methods for which the polyaniline-based conductive material according to the present invention is especially suitable. In addition, it can be stated that acidity is not especially problematic in all applications, such as accumulators and batteries.

One way of improving the processability and of reducing the acidity of a conductive polymer material which contains polyaniline doped with a protonic acid, preferably sulfonic acid and most preferably dodecylbenzenesulfonic acid, is disclosed in EP Patent Application 582919. According to the method disclosed in this publication, a certain additive is used for the neutralization of polyaniline or its derivative doped with a protonic acid, and also for its plasticization and/or stabilization. According to the method of the said publication, a mixture containing polyaniline doped with a protonic acid can be rendered more plastic, more neutral and more stable by adding to the mixture a metal compound or by treating the doped polyaniline with a metal compound. The metal compound can be selected from among numerous alternatives, according to the desired property to be emphasized. The compounds may be oxides, hydroxides, halides, or equivalent. In the invention disclosed, it is noted that the most advantageous are the compounds of zinc, of which zinc oxide ZnO has been found to be the most suitable. According to a preferred embodiment, the metal compound is allowed to react first with any protonic acid which, together with the metal compound, forms a compound which substantially neutralizes, stabilizes and plasticizes doped polyaniline. The acid reacting with the metal compound need not be the same as the protonic acid to be used for the doping of polyaniline. However, using as the acid reacting with the metal compound the same protonic acid as is used for the doping of the polyaniline has proved to be a preferred embodiment. The mixing of the ingredients is carried out preferably in a melt mixing apparatus, for example by means of a kneader, a compounder, or a screw mixer, at a temperature of approx. 50 - 200 °C. However, this method has the disadvantage that a metal compound of the said type will in higher concentrations strongly decrease the conductivity of polyaniline.

An object of the present invention is to provide a method for the preparation of a processable conductive polymer based on polyaniline or a derivative thereof, and to provide the polymer itself, the polymer having a substantially improved processability, especially in molten state. It is also an object of the invention to provide a method for the preparation of a conductive polymer material, and to provide the polymer itself, the acidity of which has been substantially reduced, i.e. to a pH range of approx. 3-8, preferably to a pH range of 5-7. Furthermore, the aim is to achieve the above-mentioned properties while maintaining conductivity of the conductive polymer material at a sufficiently high level. A further object of the present invention is to provide a processable conductive polymer material which may be used in electric or electronic devices or applications.

The disadvantages of the previously disclosed methods mentioned above have now been eliminated and the defined advantages have been achieved by the new method for the preparation of a conductive polymer material based on a polyaniline or a derivative thereof and a protonic doping acid, the method being in the main characterized in what is stated in the characterizing clause of Claim 1. It has thus been realized that an improved conductive polymer material can be obtained more easily than previously by the method of the present invention which comprises feeding a mixture comprising 1-20 wt.% of polyaniline or a derivative thereof, 50-90 wt.% of a protonic doping acid calculated as dodecylbenzenesulfonic acid, and 1-45 wt.% of water and/or a C₁-C₃ alcohol into a melt-mixing apparatus, in which it is mixed by shearing, and recovering the resulting blend, characterised in that mixing in the melt-mixing apparatus is carried out at a temperature of 50-400°C.

The present invention also provides a processable electrically conductive polymer material obtainable by:
(i) producing a polyaniline or derivative thereof which contains water or a C₁-C₃ alcohol in an amount of 1-70 wt.%,
(ii) mixing a protonic doping acid into the polyaniline or its derivative, obtained from step (i)
(iii) adding ZnO, CaCO₃, and when necessary water or a C₁-C₃ alcohol to the mixture obtained from step (ii) to form a mixture which comprises 1-20 wt.% of polyaniline or the derivative thereof, 50-90 wt.% of the protonic doping acid calculated as dodecylbenzenesulfonic acid, and 1-45 wt.% of water and/or a C₁-C₃ alcohol,
(iv) feeding the mixture obtained from step (iii) into a melt-mixing apparatus in which it is mixed by shearing at a temperature of 50-400°C, and
(v) recovering the resulting electrically conductive polymer composition from the melt-mixing apparatus.

The disadvantages of previously disclosed conductive polymers have been overcome by the provision of the polymer of the present invention, which is producible by the aforementioned method of the present invention. The polymer of the present invention can be used in electric or electronic devices, or applications, to good effect, in particular in regard to batteries, sensors, switches, light cells, circuit boards, heating elements, electrostatic discharge elimination or electromagnetic interference shielding.

In practice the polyaniline or its derivative used in the method of the present invention may be any form of polyaniline, such as the leucoemeraldine, protoemeraldine, emeraldine, nigraline or toluprotoemeraldine form. The polyaniline may also be in the form of a derivative thereof, for example a substituted polyaniline. The substituted derivatives of the polyaniline forms mentioned above are, or course, also within the protective scope of the invention. The most preferred polyaniline-type conductive polymer is polyaniline, and preferably its emeraldine base form, the formula of which is shown above in connection with the description of the state of the art.

When, in the invention, a mixture is produced which comprises, among other things, polyaniline or a derivative thereof, it is advantageous if the proportion of polyaniline or its derivative is approx. 4-10 wt.% of the amount of the mixture fed into the mixing apparatus.

The protonic doping acid used in the invention may be any protonic acid which dopes polyaniline or a derivative thereof. Such typical protonic acids include HCl, H₂SO₄, HNO₃, HClO₄, HBF₄, HPF₆, Hf, phosphoric acids, sulfonic acids, picrinic acid, m-nitrobenzoic acid, dichloroacetic acid, and polymeric acids. A preferred protonic doping acid is an organic sulfonic acid, especially an aromatic sulfonic acid, and most preferably dodecylbenzenesulfonic acid (DBSA). Other usable protonic doping acids have been disclosed in, for example, US patent publication 5 171 478, which publication is hereby appended to the present application by reference.

It is especially advantageous that the mixture to be fed into the mixing apparatus comprises 50-90 wt.% protonic doping acid, calculated as dodecylbenzenesulphonic acid. This corresponds to an amount of acid possessing an equivalent quantity of acidic protons to a given weight % dodecylbenzene sulphonic acid.

In the method according to the invention, in which a mixture comprising a polyaniline or a derivative thereof, a protonic doping acid, and water or a C₁-C₃ alcohol is compounded at an elevated temperature, the water and the C₁-C₃ alcohol serve as a plasticizing agent. It can be stated that the idea of the invention is based specifically on the combination of such a plasticizing agent and compounding, whereby a conductive polymer material more usable than previously is obtained. Such an adding of a water or alcohol plasticizing agent, among other things lowers the required mixing temperature, and thus the thermal decomposition of the mixture being treated decreases and the corroding action of the mixture on the apparatus is reduced. Some usable plasticizing agents are water, methanol, ethanol, or a mixture of these. The most preferable component is water.

It is advantageous if the mixture to be fed into the mixing apparatus comprises 1-35 wt.%, preferably approx. 5-20 wt.%, a component which is water or C₁-C₃ alcohol. When the mixture which has the above-mentioned amount of water and/or C₁-C₃ alcohol is mixed by means of the shear forces of a melt-mixing apparatus at a temperature of 50-400 °C, it is natural that the final conductive polymer material will not contain much of the plasticizing component used to form the mixture which is fed into the melt-mixing apparatus.

According to one preferred embodiment of the invention, in connection with the initial mixing together of the polyaniline or its derivative, a protonic doping acid and a water or C₁-C₃ alcohol component, it is possible to add to them also a metal compound which is preferably capable of reacting or has reacted with a protonic acid, such as the doping acid. Such a metal compound renders the doped polyaniline a less acid, more easily melt-processable, better mixing, and more stable conductive polymer material. The metal compound may vary greatly depending on whether it is desired to emphasize neutralization, in which case compounds of metals such as magnesium, barium or calcium are possible, or whether it is desired to emphasize the stabilizing action, in which case compounds of metals such as zinc, copper, aluminum, titanium, iron or zirconium are preferable. Also compounds of cadmium, lead and stannium are possible. Mixtures of metal compounds and most metal compounds are suitable for the purpose according to the invention.

The metal compounds may be oxides, hydroxides, halides, or equivalent. Also salts of weak acids, such as stearates, carbonates, ricinoleates, palmetates, octoates, laurates, phenolates, maleates, and octylthioglycolates can be used. An important compound is a condensation product of a metal compound and a protonic acid, having a melting point below 300 °C.

The preferred metal compounds used in the invention are based on zinc, copper, calcium or magnesium, the most preferred metal compound is based on zinc, such as zinc stearate or zinc oxide. Preferred compounds are oxides and hydroxides, and the most preferred are oxides, of which zinc oxide ZnO is the most preferred. According to the most preferred embodiment, zinc oxide is first reacted with a protonic doping acid, such as dodecylbenzene acid, and the zinc didodecylbenzoate thus obtained is added to the components mentioned at the beginning of the initial mixing step (a).

It is advantageous if the amount of the above-mentioned metal compound is 3-10 wt.%, preferably approx. 5-9 wt.%, of the combined total weight of the compound and the components used to form the mixture which is fed into the melt-mixing apparatus.

According to another embodiment of the invention, it is advantageous to combine the components used to form the mixture which is fed into the melt-mixing apparatus or the recovered resulting blend with a neutralizing compound, such as calcium carbonate. The use of calcium carbonate will neutralize the polyaniline or derivative thereof doped with a protonic doping agent and will cause both sufficient neutralization and retaining of conductivity in the forming conductive polymer material. It is especially advantageous to use calcium carbonate together with the above-mentioned metal compound, such as zinc oxide or its doping acid salt. A compound of metal such as zinc also acts well as a plasticizer, but in high concentrations it will lead to a dramatic lowering of the conductivity of the material. Instead, when calcium carbonate is used this will not occur; the conductivity will remain at a high level for a long time. As was already stated, both the metal compound and the calcium carbonate may be added either to the mixture before the melt-mixing step or thereafter (after recovery of the blend.

According to one embodiment of the invention, the amount of calcium carbonate used is preferably approx. 0.1-10 %, and most preferably approx. 0.5-2.5 % of the combined total weight of the calcium carbonate and the components used to form the mixture which is fed into the melt-mixing apparatus. It should be pointed out in this context that the calcium carbonate acts best when the method according to the invention is used for preparing a conductive polymer material which contains a large amount of a thermoplast in addition to the conductive plastic; there will be more about this in the present specification.

In the method according to the invention, a conductive polymer material is prepared by first producing in step (a) a mixture which is then in step (b) fed into a compounder, where it is mixed by shear forces, and is recovered in step (c) and is possibly treated further in step (d). According to one preferred embodiment, step (a) is carried out
(i) by first producing a polyaniline or derivative thereof which contains water or C₁-C₃ alcohol in an amount of 1-70 wt.%, preferably by polymerizing a monomer of the polyaniline or its derivative in the presence of said water or alcohol,
(ii) a protonic doping acid is mixed with the polyaniline or derivative thereof, obtained from step (i), and
(iii) when necessary, water or C₁-C₃ alcohol and preferably a metal compound, such as ZnO, and a neutralization agent, such as CaCO₃, are added to the mixture obtained from step (ii).

According to another, but not quite as preferred embodiment, a substantially dry polyaniline or derivative thereof is mixed with a protonic doping acid and possibly other components, whereafter a component is added which is water or C₁-C₃ alcohol, and these are mixed to serve as the initial material for compounding.

As was mentioned above, the components of step (a) of the method according to the invention or the blend recovered in step (c) can, according to one embodiment, be combined with a thermoplast. Thereby a conductive polymer material is produced which has the properties of a commercial thermoplast but which, owing to its conductive polymer, is electrically conductive so that it is suitable for being used, for example, for electrostatic discharge elimination (ESD), and electromagnetic interference shielding (EMI).

The thermoplast used in the method according to the invention may be any homo- or copolymer or any mixture thereof with each other or with other additives. According to one embodiment the thermoplast is or contains a homo- or copolymer which is based on olefin, a homo- or copolymer which is based on styrene or a derivative thereof, a vinyl homopolymer or vinyl copolymer, a thermoplastic condensation polymer, or a mixture of these.

In general the proportion of thermoplast in a commercial material is high, and according to one embodiment approx. 50-99 wt.%, preferably approx. 70-95 wt.%, of the combined total amount of the mixture from step (a) and a thermoplast, consists of the said thermoplast.

The mixing in step (b) is carried out by compounding by any standard-type mixing apparatus intended for a viscoelastic material. It may be an extruder in which the cylinder temperature and the temperature profile are adjustable, and quite particularly a double-screw extruder, in which the screw pitch and the direction of the helix and of rotation may vary. Also internal mixers, such as Banbury mixers, which are in wide commercial use, can be used. For example, heatable double-roll mills are suitable for small-scale production. From the viewpoint of the invention it is essential that the mixture of step (a) is mixed using relatively high shear forces in order to accomplish the desired solidification of the product.

It is advantageous if the mixing in step (b) is performed at a temperature of 80-300 °C, preferably 100-200 °C.

As stated above, various additives may also be added to the blend recovered from the melt mixing apparatus. One such additive is the above-mentioned metal compound which both neutralizes and plasticizes the blend without the electric conductivity of the blend being substantially lowered. The blend obtained from step (c) may also be combined with a thermoplast of the said type. When the blend recovered in step (c) is combined with the said metal compound, the said calcium carbonate and/or the said thermoplast, according to one embodiment of the invention the combined composition is fed into a melt-mixing apparatus, in which it is mixed at a temperature of 80-350 °C, preferably approx. 130-230 °C. In this case there are thus carried out two mixings by means of shear forces and heat, one of them on the mixture composition of step (a) and the other on the blend recovered in step (c).

A few embodiment examples are presented below, their only purpose being to illustrate the present invention.
Example 1. By the screw solidification method a conductive polymer complex was prepared which contained 9.7 wt.% EB wet from a water wash (dry matter content approx. 50 %), 71.4 wt.% DBSA, 7.7 wt.% ZnO, 1.5 wt.% CaCO₃, and 9.7 wt.% water. A mixture was prepared from the conductive polymer complex prepared in the manner described above and Neste HD polyethylene (NCPE 3415) at the mass ratio 10/90, the conductivity of pieces extruded from this mixture being 3.5 E-5 S/cm measured by the 4-probe method.
Example 2. By the screw solidification method a conductive polymer complex was prepared which contained 9.7 wt.% EB wet from an ethanol wash (dry matter content approx. 50 %), 71.4 wt.% DBSA, 7.7 wt.% ZnO, 1.5 wt.% CaCO₃, and 9.7 wt.% water. A mixture was prepared from the conductive polymer complex prepared in the manner described above and Neste HD polyethylene (NCPE 3415) at the mass ratio 10/90, the four-probe conductivity of pieces extruded from this mixture being 1.2 E-4 S/cm.
Example 3. A mixture was prepared from a conductive polymer complex prepared in the manner described in Example 2 and Neste HD polyethylene (NCPE 3415) at the mass ratio 8/92, the four-probe conductivity of pieces extruded from this mixture being 2.2 E-5 S/cm.
Example 4. By the screw solidification method a conductive polymer complex was prepared which contained 6.2 wt.% EB dried after an ethanol wash (dry matter content higher than 99 %), 83.4 wt.% DBSA, 8.9 wt.% ZnO, and 1.5 wt.% CaCO₃. A mixture was prepared from the conductive polymer complex prepared in the manner described above and Neste HD polyethylene (NCPE 3415) at the mass ratio 8/92, the four-probe conductivity of pieces extruded from this mixture being lower than 1 E-9 S/cm.
Example 5. A complex which contained 7.5 % EB dried after an ethanol wash (dry matter content higher than 99 %), 82.2 wt.% DBSA, 8.8 wt.% ZnO, and 1.5 wt.% CaCO₃ was solidified by heating it in a dielectric analyzer at a rate of 3 °C/min. The solidification temperature (determined as the maximum point of the tangent of loss) was 160 ° C.
Example 6. A complex which contained 6.5 wt.% EB dried after an ethanol wash (dry matter content higher than 99 %), 72.6 wt.% DBSA, 7.9 wt.% ZnO, 1.5 wt.% CaCO₃, and 12 wt.% water was solidified by heating it in a dielectric analyzer at a rate of 3 °C/min. The solidification temperature was 110 °C.
Example 7. The procedure was as in the preceding examples, but the mixing proportions were according to Table 1. The results are also shown in Table 1.

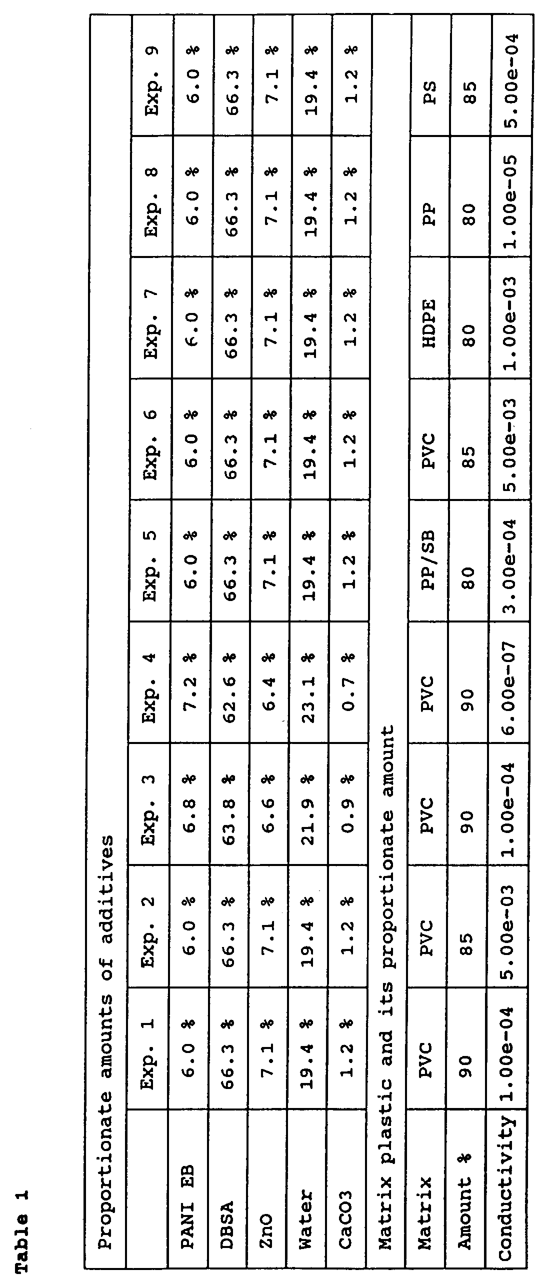

Example 8 The procedure was as in the preceding examples, but the proportions of ingredients and the results were in accordance with Table 2.

**Table 2**

| Proportionate amounts of additives | | | | |
|---|---|---|---|---|
| Exp. 1 | Example 8 | Example 9 | Example 10 | |
| 6.0 % | 5.1 % | 4.4 % | 4.4 % | PANI EB |
| 66.3 % | 55.5 % | 47.8 % | 47.8 % | DBSA |
| 7.1 % | 5.9 % | 5.1 % | 5.1 % | ZnO |
| 19.4 % | 32.4 % | 41.9 % | 41.9 % | water |
| 1.2 % | 1.0 % | 0.9 % | 0.9 % | CaCO3 |
| | | | | Matrix plastic and its proportionate amount |
| PVC | PVC | PVC | PVC | Matrix |
| 90 | 90 | 90 | 90 | Amount % |
| 1.00e-04 | as in Example 1 | as in Example 1 | as in Example 1 | Conductivity |

## Claims

1. A method for the preparation of a processable conductive polymer material based on a polyaniline or a derivative thereof and a protonic doping acid, comprising feeding a mixture comprising 1-20 wt.% of polyaniline or a derivative thereof, 50-90 wt.% of a protonic doping acid calculated as dodecylbenzenesulfonic acid, and 1-45 wt.% of water and/or a C₁-C₃ alcohol into a melt-mixing apparatus, in which it is mixed by shearing, and recovering the resulting blend,
characterised in that mixing in the melt-mixing apparatus is carried out at a temperature of 50-400°C.

2. A method according to Claim 1, wherein the polyaniline or its derivative in the mixture is in the emeraldine base form.

3. A method according to Claim 1 or Claim 2, wherein the mixture contains 4-10 wt.% of polyaniline or a derivative thereof.

4. A method according to any preceding Claim, wherein the protonic doping acid is an organic sulfonic acid or a derivative thereof, preferably dodecylbenzenesulfonic acid.

5. A method according to any preceding Claim, wherein the mixture contains 60-85 wt.% protonic doping acid, calculated as dodecylbenzene-sulfonic acid.

6. A method according to any preceding Claim, wherein the mixture contains 1-35 wt.%, preferably 5-20 wt.%, of water and/or a C₁-C₃ alcohol.

7. A method according to any preceding Claim, wherein the C₁-C₃ alcohol is methanol and/or ethanol.

8. A method according to any preceding Claim, wherein the mixture or the resulting blend are/is combined with a metal compound which preferably is capable of reacting or has reacted with a protonic acid, preferably the doping acid.

9. A method according to Claim 8, wherein the metal compound is a zinc compound, preferably zinc oxide.

10. A method according to Claim 8 or Claim 9, wherein the amount of the metal compound is 3-10 wt.%, preferably 5-9%, based on the combined total weight of the metal compound and the components constituting the mixture.

11. A method according to any preceding Claim, wherein the mixture or the resulting blend are/is combined with calcium carbonate.

12. A method according to Claim 11, wherein the amount of calcium carbonate is 0.1-10%, preferably 0.5-2.5%, based on the combined total weight of the calcium carbonate and the components constituting the mixture.

13. A method according to any preceding Claim, wherein the mixture is produced by:
(i) producing a polyaniline or derivative thereof which contains water or a C₁-C₃ alcohol in an amount of 1-70 wt.%, preferably by polymerizing a monomer of the polyaniline or its derivative in the presence of said water or alcohol,
(ii) mixing a protonic doping acid into the polyaniline or its derivative, obtained from step (i), and
(iii) adding, when necessary, water or a C₁-C₃ alcohol and preferably a metal compound, such as ZnO, and a neutralization agent, such as CaCO₃, to the mixture obtained from step (ii).

14. A method according to any preceding Claim, wherein the mixture or the resulting blend are/is combined with a thermoplast.

15. A method according to Claim 14, wherein the thermoplast is a homo- or copolymer based on an olefin; a homo- or copolymer based on styrene or a derivative thereof; a vinyl polymer or vinyl copolymer; an acrylic homopolymer or acrylic copolymer; a thermoplastic condensation polymer; or a mixture of these.

16. A method according to Claim 14 or Claim 15, wherein the amount of thermoplast is 55-99 wt.%, preferably 70-95 wt.%, based on the combined total weight of the thermoplast and the components constituting the mixture.

17. A method according to any preceding Claim, wherein the mixing by shearing is carried out using a kneader, a compounder, a screw mixer, or a roll mixer.

18. A method according to any preceding Claim, wherein the mixing by shearing is carried out at a temperature of 80-300°C, preferably 100-200°C.

19. A method according to any preceding Claim, wherein in the event that the resulting blend is combined with a metal compound, a neutralizing compound, such as calcium carbonate, and/or a thermoplast, the combined composition is fed into a mixing apparatus, in which it is mixed by means of shear forces at a temperature of 80-350°C, preferably 130-230°C.

20. A processable electrically conductive polymer composition obtainable by:
(i) producing a polyaniline or derivative thereof which contains water or a C₁-C₃ alcohol in an amount of 1-70 wt.%,
(ii) mixing a protonic doping acid into the polyaniline or its derivative, obtained from step (i)
(iii) adding ZnO, CaCO₃, and when necessary water or a C₁-C₃ alcohol to the mixture obtained from step (ii) to form a mixture which comprises 1-20 wt.% of polyaniline or the derivative thereof, 50-90 wt.% of the protonic doping acid calculated as dodecylbenzenesulfonic acid, and 1-45 wt.% of water and/or a C₁-C₃ alcohol,
(iv) feeding the mixture obtained from step (iii) into a melt-mixing apparatus in which it is mixed by shearing at a temperature of 50-400°C, and
(v) recovering the resulting electrically conductive polymer composition from the melt-mixing apparatus.

21. A processable electrically conductive polymer material according to Claim 20, having a pH of from 3 to 8.

22. Use of a processable electrically conductive polymer material according to Claim 20 or Claim 21 in electric or electronic devices or applications, such as batteries, sensors, switches, light cells, circuit boards, heating elements, electrostatic discharge elimination or electromagnetic interference shielding.

## Patentansprüche

1. Verfahren zur Herstellung eines verarbeitbaren leitfähigen Polymermaterials basierend auf einem Polyanilin oder einem Derivat davon und einer dotierenden Protonensäure, umfassend Einleiten eines Gemisches, umfassend 1 bis 20 Gew.% Polyanilin oder ein Derivat davon, 50 bis 90 Gew.% einer dotierenden Protonensäure, berechnet als Dodecylbenzolsulfonsäure, und 1 bis 45 Gew.% Wasser und/oder einen C₁-C₃ Alkohol, in eine Schmelzmischvorrichtung, in der sie durch Scherung gemischt wird, und Entnahme der resultierenden Mischung, dadurch gekennzeichnet, daß das Mischen in der Schmelzmischvorrichtung bei einer Temperatur von 50 bis 400°C durchgeführt wird.

2. Verfahren nach Anspruch 1, worin das Polyanilin oder sein Derivat in dem Gemisch in der Emeraldin-Grundform (base form) ist.

3. Verfahren nach Anspruch 1 oder Anspruch 2, worin das Gemisch 4 bis 10 Gew.% Polyanilin oder ein Derivat davon enthält.

4. Verfahren nach mindestens einem der vorhergehenden Ansprüche, worin die dotierende Protonensäure eine organische Sulfonsäure oder ein Derivat davon ist, bevorzugt Dodecylbenzolsulfonsäure.

5. Verfahren nach mindestens einem der vorhergehenden Ansprüche, worin das Gemisch 60 bis 85 Gew.% dotierende Protonensäure enthält, berechnet als Dodecylbenzolsulfonsäure.

6. Verfahren nach mindestens einem der vorhergehenden Ansprüche, worin das Gemisch 1 bis 35 Gew.%, bevorzugt 5 bis 20 Gew.%, Wasser und/oder einen C₁-C₃ Alkohol enthält.

7. Verfahren nach mindestens einem der vorhergehenden Ansprüche, worin der C₁-C₃ Alkohol Methanol und/oder Ethanol ist.

8. Verfahren nach mindestens einem der vorhergehenden Ansprüche, worin das Gemisch oder die resultierende Mischung mit einer Metallverbindung kombiniert werden/wird, die bevorzugt mit einer Protonensäure, bevorzugt der dotierenden Säure, reagieren kann oder reagiert hat.

9. Verfahren nach Anspruch 8, worin die Metallverbindung eine Zinkverbindung, vorzugsweise Zinkoxid ist.

10. Verfahren nach Anspruch 8 oder Anspruch 9, worin der Gehalt der Metallverbindung 3 bis 10 Gew.%, vorzugsweise 5 bis 9 % ist, bezogen auf das kombinierte Gesamtgewicht der Metallverbindung und der Komponenten, die das Gemisch bilden.

11. Verfahren nach mindestens einem der vorhergehenden Ansprüche, worin das Gemisch oder die resultierende Mischung mit Calciumcarbonat kombiniert werden/wird.

12. Verfahren nach Anspruch 11, worin der Gehalt des Calciumcarbonats 0,1 bis 10 %, vorzugsweise 0,5 bis 2,5 %, ist, bezogen auf das kombinierte Gesamtgewicht des Calciumcarbonats und den Komponenten, die das Gemisch bilden.

13. Verfahren nach mindestens einem der vorhergehenden Ansprüche, worin das Gemisch erzeugt wird durch:
(i) Herstellen eines Polyanilins oder eines Derivats davon, das Wasser oder einen C₁-C₃ Alkohol in einer Menge von 1 bis 70 Gew.% enthalt, vorzugsweise durch Polymerisieren eines Monomers des Polyanilins oder seines Derivats in Gegenwart des Wassers oder Alkohols,
(ii) Mischen der dotierenden Protonensäure in das Polyanilin oder sein Derivat, erhalten aus Stufe (i) und
(iii) wenn nötig, Zugabe von Wasser oder einem C₁-C₃ Alkohol und vorzugsweise einer Metallverbindung, wie ZnO, und eines Neutralisierungsmittels, wie CaCO₃, zu dem aus Schritt (ii) erhaltenen Gemisch.

14. Verfahren nach mindestens einem der vorhergehenden Ansprüche, worin das Gemisch oder die resultierende Mischung mit einem Thermoplast kombiniert werden/wird.

15. Verfahren nach Anspruch 14, worin der Thermoplast ein Homo- oder Copolymer, basierend auf einem Olefin; ein Homo- oder Copolymer, basierend auf Styrol oder einem Derivat davon; ein Vinylpolymer oder Vinylcopolymer; ein Acrylhomopolymer oder Acrylcopolymer; ein thermoplastisches Kondensationspolymer; oder ein Gemisch von diesen, ist.

16. Verfahren nach Anspruch 14 oder Anspruch 15, worin der Gehalt des Thermoplasts 55 bis 99 Gew.%, vorzugsweise 70 bis 95 Gew.% ist, bezogen auf das kombinierte Gesamtgewicht des Thermoplasts und der Komponenten, die das Gemisch bilden.

17. Verfahren nach mindestens einem der vorhergehenden Ansprüche, worin das Mischen durch Scherung ausgeführt wird unter Verwendung einer Knetmaschine, eines Kompound-Mischers, eines Schneckenmischers oder eines Walzmischers.

18. Verfahren nach mindestens einem der vorhergehenden Ansprüche, worin das Mischen durch Scherung bei einer Temperatur von 80 bis 300°C, vorzugsweise 100 bis 200°C, ausgeführt wird.

19. Verfahren nach mindestens einem der vorhergehenden Ansprüche, worin für den Fall, daß die resultierende Mischung mit einer Metallverbindung, einem Neutralisierungsmittel, wie Calciumcarbonat, und/oder einem Thermoplast kombiniert wird, die kombinierte Zusammensetzung in eine Mischvorrichtung eingeleitet wird, in der sie durch Scherkräfte bei einer Temperatur von 80 bis 350°C, vorzugsweise 130 bis 230°C, gemischt wird.

20. Verarbeitbare elektrisch leitfähige Polymerzusammensetzung, erhältlich durch:
(i) Herstellen eines Polyanilins oder eines Derivats davon, das Wasser oder einen C₁-C₃ Alkohol in einer Menge von 1 bis 70 Gew.% enthält,
(ii) Mischen einer dotierenden Protonensäure in das Polyanilin oder sein Derivat, erhalten aus Stufe (i),
(iii) Zugabe von ZnO, CaCO₃, und wenn nötig Wasser oder einem C₁-C₃ Alkohol zu dem Gemisch, erhalten aus Stufe (ii), wodurch ein Gemisch gebildet wird, das 1 bis 20 Gew.% Polyanilin oder ein Derivat davon, 50 bis 90 Gew.% der dotierenden Protonensäure, berechnet als Dodecylbenzolsulfonsäure, und 1 bis 45 Gew.% Wasser und/oder C₁-C₃ Alkohol umfaßt,
(iv) Einleiten des Gemisches, erhalten in Stufe (iii) in eine Schmelzmischvorrichtung, in der sie durch Scherung bei einer Temperatur von 50 bis 400°C gemischt wird, und
(v) Entnahme der resultierenden elektrisch leitfähigen Polymerzusammensetzung aus der Schmelzmischvorrichtung.

21. Verarbeitbares elektrisch leitfähiges Polymermaterial nach Anspruch 20 mit einem pH von 3 bis 8.

22. Verwendung des verarbeitbaren elektrisch leitfähigen Polymermaterials nach Anspruch 20 oder Anspruch 21 in elektrischen oder elektronischen Geräten oder Anwendungen, wie Batterien, Sensoren, Schaltern, Photozellen, Leiterplatten, Heizelemente, elektrostatische Aufladungseliminierung oder elektromagnetische Interferenzabschirmung.

## Revendications

1. Procédé de préparation d'un matériau de polymère conducteur façonnable à base de polyaniline ou d'un dérivé de celle-ci, et d'un acide de dopage protonique, comprenant le chargement d'un mélange comprenant de 1 à 20 % en poids de polyaniline ou d'un dérivé de celle-ci, de 50 à 90 % en poids d'un acide de dopage protonique calculé comme acide dodécylbenzène-sulfonique, et de 1 à 45 % en poids d'eau et/ou d'un alcool en C₁-C₃ dans un appareil de mélange en fusion, dans lequel il est mélangé par cisaillement, et la récupération du mélange résultant,
caractérisé en ce que le mélange dans l'appareil de mélange en fusion est exécuté à une température de 50 à 400°C.

2. Procédé selon la revendication 1, dans lequel la polyaniline ou son dérivé dans le mélange est sous la forme de base de l'émeraldine.

3. Procédé selon la revendication 1 ou la revendication 2, dans lequel le mélange contient de 4 à 10 % en poids de polyaniline ou d'un dérivé de celle-ci.

4. Procédé selon l'une quelconque des revendications précédentes, dans lequel l'acide de dopage protonique est un acide sulfonique organique ou un dérivé de celui-ci, de préférence de l'acide dodécylbenzène-sulfonique.

5. Procédé selon l'une quelconque des revendications précédentes, dans lequel le mélange contient de 60 à 85 % en poids d'acide de dopage protonique, calculé comme acide dodécylbenzène-sulfonique.

6. Procédé selon l'une quelconque des revendications précédentes, dans lequel le mélange contient de 1 à 35 % en poids, de préférence de 5 à 20 % en poids, d'eau et/ou d'un alcool en C₁-C₃.

7. Procédé selon l'une quelconque des revendications précédentes, dans lequel l'alcool en C₁-C₃ est du méthanol et/ou de l'éthanol.

8. Procédé selon l'une quelconque des revendications précédentes, dans lequel le mélange ou le mélange résultant sont/est combiné avec un composé métallique qui est de préférence capable de réagir ou a réagi avec un acide protonique, de préférence l'acide de dopage.

9. Procédé selon la revendication 8, dans lequel le composé métallique est un composé de zinc, de préférence de l'oxyde de zinc.

10. Procédé selon la revendication 8 ou la revendication 9, dans lequel la proportion du composé métallique est de 3 à 10 % en poids, de préférence de 5 à 9 %, sur la base du poids total combiné du composé métallique et des composants constituant le mélange.

11. Procédé selon l'une quelconque des revendications précédentes, dans lequel le mélange ou le mélange résultant sont/est combiné avec du carbonate de calcium.

12. Procédé selon la revendication 11, dans lequel la proportion de carbonate de calcium est 0,1 à 10 %, de préférence de 0,5 à 2,5 %, sur la base du poids total combiné du carbonate de calcium et des composants constituant le mélange.

13. Procédé selon l'une quelconque des revendications précédentes, dans lequel le mélange est produit par :
(i) la fabrication d'une polyaniline ou d'un dérivé de celle-ci qui contient de l'eau ou un alcool en C₁-C₃ en une proportion de 1 à 70 % en poids, de préférence en polymérisant un monomère de la polyaniline ou de son dérivé en présence de ladite eau ou dudit alcool,
(ii) le mélange d'un acide de dopage protonique dans la polyaniline ou son dérivé, obtenue à partir de l'étape (i), et
(iii) l'ajout, lorsque nécessaire, d'eau ou d'un alcool en C₁-C₃ et de préférence d'un composé métallique, tel que ZnO, et d'un agent de neutralisation, tel que CaCO₃, au mélange obtenu à partir de l'étape (ii).

14. Procédé selon l'une quelconque des revendications précédentes, dans lequel le mélange ou le mélange résultant sont/est combiné avec une matière thermoplastique.

15. Procédé selon la revendication 14, dans lequel la matière thermoplastique est un homopolymère ou un copolymère à base d'oléfine, un homopolymère ou un copolymère à base de styrène ou d'un dérivé de celui-ci, un polymère vinylique ou un copolymère vinylique, un homopolymère acrylique ou un copolymère acrylique, un polymère de condensation thermoplastique, ou un mélange de ceux-ci.

16. Procédé selon la revendication 14 ou la revendication 15, dans lequel la proportion de matière thermoplastique est de 55 à 99 % en poids, de préférence de 70 à 95 % en poids, sur la base du poids total combiné de la matière thermoplastique et des composants constituant le mélange.

17. Procédé selon l'une quelconque des revendications précédentes, dans lequel le mélange par cisaillement est exécuté en utilisant un malaxeur, un dispositif de compoundage, un mélangeur à hélice, ou un mélangeur à laminoir.

18. Procédé selon l'une quelconque des revendications précédentes, dans lequel le mélange par cisaillement est exécuté à une température de 80 à 300°C, de préférence de 100 à 200°C.

19. Procédé selon l'une quelconque des revendications précédentes, dans lequel, dans le cas où le mélange résultant est combiné avec un composé métallique, un composé de neutralisation, tel que du carbonate de calcium et/ou une matière thermoplastique, la composition combinée est chargée dans un appareil de mélange, dans lequel elle est mélangée au moyen de forces de cisaillement à une température de 80 à 350°C, de préférence de 130 à 230°C.

20. Composition de polymère électriquement conducteur façonnable pouvant être obtenue par :
(i) la fabrication d'une polyaniline ou d'un dérivé de celle-ci qui contient de l'eau ou un alcool en C₁-C₃ en une proportion de 1 à 70 % en poids,
(ii) le mélange d'un acide de dopage protonique dans la polyaniline ou son dérivé, obtenue à partir de l'étape (i)
(iii) l'ajout de ZnO, de CaCO₃, et lorsque nécessaire, d'eau ou d'un alcool en C₁-C₃ au mélange obtenu à partir de l'étape
(ii) afin de former un mélange qui comprend de 1 à 20 % en poids de polyaniline ou de son dérivé, de 50 à 90 % en poids de l'acide de dopage protonique calculé comme acide dodécylbenzène-sulfonique, et de 1 à 45 % en poids d'eau et/ou d'un alcool en C₁-C₃,
(iv) le chargement du mélange obtenu à partir de l'étape (iii) dans un appareil de mélange en fusion dans lequel il est mélangé par cisaillement à une température de 50 à 400°C, et
(v) la récupération de la composition de polymère électriquement conducteur résultante à partir de l'appareil de mélange en fusion.

21. Matériau de polymère électriquement conducteur façonnable selon la revendication 20, présentant un pH de 3 à 8.

22. Utilisation d'un matériau de polymère électriquement conducteur façonnable selon la revendication 20 ou la revendication 21 dans des dispositifs ou des applications électriques ou électroniques, tels que des batteries, des capteurs, des commutateurs, des cellules photoélectriques, des cartes de circuit, des éléments chauffants, une élimination de décharges électrostatiques ou un blindage contre les interférences électromagnétiques.
